# EUROPÄISCHE PATENTSCHRIFT

(11) **EP 2 722 482 B1**
(45) Veröffentlichungstag und Bekanntmachung des Hinweises auf die Patenterteilung: **09.08.2017**
(21) Anmeldenummer: 13004953.9
(22) Anmeldetag: 16.10.2013
(51) Int. Cl.: F01C 17/02, F04C 2/22, F04C 13/00, F04C 15/00, F01C 1/22, F03B 1/00, F03B 3/10, F03B 13/06, F03C 2/22, E02B 9/00

(54) **Rotationskolben-Verdrängermaschine**
Rotary piston positive displacement machine
Machine à piston rotatif à déplacement positif

(30) Priorität: 17.10.2012 DE 102012020326
(43) Veröffentlichungstag der Anmeldung: 23.04.2014
(73) Patentinhaber: Jung, Herbert, 87755 Kirchhaslach (DE)
(72) Erfinder: Jung, Herbert, 87755 Kirchhaslach (DE)
(74) Vertreter: Fiener, Josef

(56) Entgegenhaltungen:
- EP-A2- 0 799 996
- DE-A1-102004 052 928
- DE-U1-202011 000 798
- US-A- 4 389 172
- US-A1- 2006 051 228

## Beschreibung

Die Erfindung betrifft eine Rotationskolben-Verdrängermaschine mit den oberbegrifflichen Merkmalen des Patentanspruchs 1.

Eine derartige Rotationskolben-Verdrängermaschine ist aus dem Patent DE 10 2004 052 928 des Anmelders bekannt. Darin wird eine Rotationskolben-Pumpe beschrieben, die vorzugsweise zum Pumpen von Dickstoffen, im besonderen von Beton, gedacht ist. In der Beschreibung des Patents ist auch vermerkt, dass die Förderrichtung durch die Umkehr der Drehrichtung am Eintrieb bzw. der Drehrichtung des Rotationskolbens umgekehrt wird.

Mit der Patentanmeldung CH 702 901 ist eine Rotationskolbenmaschine bekannt gemacht, die als Kraftmaschine in einem Wasserkraftwerk, vorzugsweise Fließwasserkraftwerk, Gezeiten-Wasserkraftwerk, zum Antrieb eines Generators für die Erzeugung von elektrischem Strom eingesetzt vorgesehen ist. Ein Einsatz als Arbeitsmaschine, z. B. in einem Pumpspeicher-Kraftwerk, ist hierbei nicht angesprochen.

Zum Antrieb von Generatoren zur Erzeugung von elektr. Strom in Wasserkraftwerken werden bislang in den meisten Fällen Strömungsmaschinen (Turbinen) als Wassermotoren eingesetzt. Hierbei wird die Energie in der Hauptsache aus der Umlenkung und/oder Geschwindigkeitsänderung eines Wasser-Massestroms durch die Turbinenräder in den Strömungsmaschinen (Turbinen) unterschiedlicher Bauart gewonnen. Die im wesentlichen eingesetzten Bauarten der Strömungsmaschinen sind die sog. Kaplanturbinen (Propellerturbinen), Francisturbinen und Peltonturbinen (Freistrahlturbinen). Der Einsatz der verschiedenen Bauarten richtet sich hauptsächlich nach der Größe des zur Verfügung stehenden Wasser-Massestroms und der Fallhöhe. Außer den Peltonturbinen (Freistrahlturbinen) können die genannten Turbinen-Bauarten auch als Pumpen eingesetzt werden, was ihren Einsatz in Pumpspeicher-Wasserkraftwerken als Turbine und als Pumpe ermöglicht. Dabei muss jedoch ein geringerer Wirkungsgrad (im Pumpbetrieb) in Kauf genommen werden. Bei Strömungsmaschinen (Turbinen muss die größte Aufmerksamkeit auf den höchstmöglichen Wirkungsgrad gerichtet sein. DE202011000798U offenbart ein Speicherkraftwerk, das der Speicherung von elektrischer Energie durch Hochpumpen von Wasser dient, welche auf dem umgekehrten Wege über Turbinen wieder in elektrischen Strom umgewandelt werden kann. Aufgrund des vorstehend angesprochenen Wirkprinzips bei der Energiegewinnung erfordert dies, den Strömungsweg des Arbeitsmediums Wasser innerhalb der Strömungsmaschine optimal zu gestalten, was einen sehr hohen Fertigungsaufwand für die Einrichtungen zur Wasserzuführung zu den Turbinenrädern und für die Turbinenräder selbst sowie gegebenenfalls auch für die Wasserführung nach den Turbinenrädern erfordert. Um den Wirkungsgrad bei sich in einem festgelegten Bereich ändernden Wert für den zur Verügung stehenden Wasser-Massestrom möglichst hoch zu halten, werden zudem zur Anpassung des Strömungsweges die Einrichtungen für die Wasserzuführung zu den Turbinenrädern als auch die Turbinenräder selbst (bei Kaplanturbinen) in ihrer Geometrie verstellbar ausgeführt, was den Aufwand insgesamt noch wesentlich erhöht.

Der Erfindung liegt die Aufgabe zugrunde, eine Verdrängermaschine zu schaffen, bei der das Wirkprinzip für die Energiegewinnung aus Wasserkraft in der Hauptsache in der direkten Nutzung der Lageenergie des Arbeitsmediums Wasser, nämlich dem, aus dem Gewicht der über der Verdrängermaschine stehenden Wassersäule erzeugten, hydrostatischen Druck besteht und somit die Erfordernisse bezüglich der optimalen Gestaltung des Strömungsweges für das Arbeitsmedium Wasser auf seinem Weg durch die Verdrängermaschine weitestgehend entfallen, und die vergleichsweise einfach herzustellen und zu integrieren ist.

Der Erfindung liegt weiter die Aufgabe zugrunde, eine Verdrängermaschine zu schaffen, bei der das Wirkprinzip für die Energiegewinnung nahezu vollkommen reversibel ist und die somit in einem Wasserkraftwerk als Verdränger-Kraftmaschine (Wassermotor) als auch als Verdränger-Arbeitsmaschine (Pumpe) einsetzbar ist.

Diese Aufgabe wird gelöst durch eine Rotationskolben-Verdrängermaschine gemäß den Merkmalen des Patentanspruchs 1. Bevorzugte Ausführungen sind Gegenstand der Unteransprüche.

Der als prismenartiger Körper ausgebildete Rotor, bei dem mindestens die Verbindungsgeraden der Ecken der Grundflächen ein gleichseitiges Vieleck bilden, erzeugt mit seinen Längskanten bei dessen Rotation um seine, gleichzeitig auf einer Kreisbahn bewegten Zentrumsache die längsseitige innere Wandfläche des Gehäuses. Dabei muss der Rotor, während dessen Zentrumsachse einen Vollkreis durchläuft, um den Zentriwinkel des aus den Verbindungsgeraden der Ecken der Grundflächen des prismenartigen Körpers gebildeten, gleichseitigen Veilecks rotiert werden. Durch die stete Berührung der Längskanten des prismenartigen Körpers mit der längsseitigen inneren Wandfläche des Gehäuses werden bei der Bewegung des Rotors mit der längsseitigen inneren Wandfläche des Gehäuses und den längsseitigen äußeren Wandflächen des prismenartigen Körpers, in Verbindung mit den inneren Wandflächen der beiden stirnseitigen Wände des Gehäuses, sich stetig verändernde Räume gebildet.

An der längsseitigen Wand des Gehäuses sind im Wechsel mindestens jeweils eine Öffnung für die niederdruckseitige Zu- bzw. Abführung des Arbeitsmediums und eine Öffnung für die hochdruckseitige Zu- bzw. Abführung des Arbeitsmediums vorgesehen. Für die Steuerung der Zu- bzw. Abführung des Arbeitsmediums sind keine Ventile erforderlich, wodurch die Herstellung der Rotationskolben-Verdrängermaschine wesentlich vereinfacht wird.

Es muss jedoch gegeben sein, dass auf der längsseitigen inneren Wandfläche des Gehäuses jeweils das Ende einer Öffnung für die niederdruckseitige Zu- bzw. Abführung und der Anfang einer Öffnung für die hochdruckseitige Zu- bzw. Abführung sowie das Ende einer Öffnung für die hochdruckseitige Zu- bzw. Abführung und der Anfang einer Öffnung für die niederdruckseitige Zu- bzw. Abführung in Bezug auf das jeweilige Zentrum des Rotors um den Zentriwinkel des aus den Verbindungsgeraden der Ecken der Grundflächen des prismenartigen Körpers gebildeten, gleichseitigen Vielecks versetzt angeordnet sind (z.B. bei einem Dreiecksrotor 120°).

Aus dieser Gesetzmäßigkeit ergibt sich, dass die Öffnungen für die hochdruckseitige Zu- bzw. Abführung des Arbeitsmediums stets von den Öffnungen für die niederdruckseitige Zu- bzw. Abführung des Arbeitsmediums abgetrennt sind. Es ist somit bei Stillstand des Rotors kein Durchgang für das Arbeitsmedium durch die Rotationskolben-Verdrängermaschine möglich. Dadurch erübrigen sich zusätzliche Absperrorgane in den Leitungen für die Zu- bzw. Abführung des Arbeitsmediums.

Die Kreisbewegung der Zentrumsachse des Rotors wird durch dessen Lagerung auf einem Exzenter einer in den stirnseitigen Wänden des Gehäuses gelagerten Exzenterwelle bei deren Rotation erzeugt. Die Rotation des Rotors um seine Zentrumsachse entsprechend der beschriebenen Gesetzmäßigkeit kann mit verschiedenen Exzentergetrieben erzeugt werden (siehe Patentschrift DE 10 2004 052 928)

Bei festgelegter Exzentrizität für die Exzenterwelle sowie festgelegter Abmessung des prismenartigen Körpers des Rotors (repräsentiert durch dessen Umkreis-Durchmesser) bestimmen die Lage der Öffnungen für die hochdruckseitige und niederdruckseitige Zu- bzw. Abführung des Arbeitsmediums und deren Größe auf der längsseitigen inneren Wandfläche des Gehäuses in Verbindung mit der Länge des prismenartigen Körpers des Rotors das geometrische Verdrängervolumen der Rotationskolben-Verdrängermaschine. Um den maximalen Wert für den Massenstrom für das Arbeitsmedium zu erhalten, ist die Lage und Größe (in Umfangsrichtung) der genannten Öffnungen so festzulegen, dass der Wert für das geometrische Verdrängervolumen ein Maximum wird. Mit der Umkehr der Drehrichtung des Rotors wird die Richtung des Massenstroms umgekehrt. Dies ermöglicht den Einstz der Rotationskolben-Verdrängermaschine in einem Wasserkraftwerk als Verdränger Kraftmaschine (Wassermotor) als auch als Verdränger-Arbeitsmaschine (Pumpe).

Bei der Anwendung des vorstehend beschriebenen Prinzips auf einen Rotor, bei dem die Verbindungsgeraden der Ecken der Grundflächen des prismenartigen Körpers ein gleichseitiges Dreieck bilden, wird das größtmögliche Verdrängervolumen bei festgelegter Exzentrizität der Exzenterwelle und festgelegter Abmessung des Rotors (repräsentiert durch den Umkreisdurchmesser des prismenartigen Körpers des Rotors) erreicht. Wegen der Gesetzmäßigkeit für die Anordnung der Öffnungen ist hier jeweils nur eine Öffnung für die hochdruckseitige und niederdruckseitige Zu- bzw. Abführung des Arbeitsmediums auf der längsseitigen inneren Wandfläche des Gehäuses möglich. Entsprechend ist auch nur ein Verdrängerzyklus bei einer vollen Rotation des Rotors möglich. Die Pulsation des Verdrängerstroms ist bei einem Rotor, bei dem die Verbindungsgeraden der Ecken der Grundflächen des prismenartigen Körpers ein gleichseitiges Dreieck bilden, am Größten.

Wird ein Rotor gewählt, bei dem die Verbindungsgeraden der Ecken der Grundflächen des prismenartigen Körpers ein gleichseitiges Fünfeck bilden, können auf der längsseitigen inneren Wandfläche des Gehäuses jeweils zwei Öffnungen für die hochdruckseitige und niederdruckseitige Zu- bzw. Abführung des Arbeitsmediums vorgesehen werden. Entsprechend ergeben sich hier zwei Verdrängerzyklen bei einer vollen Rotation des Rotors. Mit zunehmender Anzahl der Ecken der Grundflächen für den prismenartigen Körper des Rotors nimmt auch die Anzahl der möglichen Öffnungen für die hochdruckseitige und niederdruckseitige Zu- bzw. Abführung des Arbeitsmediums und entsprechend die Anzahl der möglichen Verdrängerzyklen bei einer vollen Rotation des Rotors zu. Die Pulsation des Verdrängerstroms nimmt mit zunehmender Anzahl der Ecken der Grundflächen für den prismenartigen Körper des Rotors ab.

Eine sehr wesentliche Reduktion der Pulsation des Verdrängerstroms wird auch durch die Anordnung von mindestens zwei gleichen Rotationskolben-Verdrängermaschinen, deren Exzenterwellen um ein bestimmtes Winkelmaß versetzt gekoppelt sind, erreicht. Die Kopplung von mehreren (mindestens querschnittsgleichen) Rotationskolben-Verdrängermaschinen ist auch in Bezug auf deren wirtschaftliche Herstellung vorteilhaft.

Das geometrische Verdrängervolumen für die Rotationskolben-Verdrängermaschine kann durch die Variation der geometrischen Parameter in weiten Grenzen an die Erfordernisse, die durch den Massenstrom des Arbeitsmediums gegeben sind, angepasst werden. Eine weitere Möglichkeit für die Anpassung des geometrischen Verdrängervolumens an den vorgegebenen Massenstrom des Arbeitsmediums ist durch dessen Aufteilung auf mehrere aneinander gekoppelte, bevorzugt querschnittsgleich ausgeführte Rotationskolben-Verdrängermaschinen gegeben.

Die bestmögliche Ausnutzung der Fallhöhe respektive des hydrostatischen Druckes ist für die Rotationskolben-Verdrängermaschinen gegeben, wenn zumindest die niederdruckseitigen Öffnungen für die Zu- bzw. Abführung des Arbeitsmediums unterhalb des Unterwasserniveaus liegen. Im Rotor ist auf dessen Zentrumsachse eine, das Exzentergetriebe radial umschließende, an die inneren Wandflächen der beiden stirnseitigen Wände des Gehäuses reichende, bevorzugt zylinderförmige Zwischenwand angeordnet.

Der Raum, der durch die längsseitigen inneren Wandflächen der Außenwände des prismenartigen Körpers und den längsseitigen äußeren Wandflächen der Zwischenwand in Verbindung mit den inneren Wandflächen der beiden stirnseitigen Wände des Gehäuses gebildet wird, ist als Spülkammer zur Aufnahme von Spaltverlusten (Massenstrom-Verlust) vorgesehen. Die Spaltverluste können über die stirnseitigen Wände des Gehäuses in die niederdruckseitigen Zu- bzw. Abführungen für das Arbeitsmedium abgeleitet werden.

Am Rotor, an den Stirnseiten der, die längsseitigen äußeren Wandflächen des prismenartigen Körpers bildenden Außenwände sind Dichtungselemente vorgesehen, welche die inneren Wandflächen der beiden stirnseitigen Außenwände des Gehäuses berühren. Dadurch wird der gesamte Innenraum, der durch die längsseitigen inneren Wandflächen der Außenwände des prismenartigen Körpers in Verbindung mit den inneren Wandflächen der beiden stirnseitigen Außenwände des Gehäuses gebildet wird, gegen die sich stetig verändernden Räume, die mit der längsseitigen inneren Wandfläche des Gehäuses und den längsseitigen äußeren Wandflächen des prismenartigen Körpers in Verbindung mit den inneren Wandflächen der beiden stirnseitigen Wände des Gehäuses gebildet werden, abgedichtet.

Am Rotor, an den Längskanten des prismenartigen Körpers können Dichtungsleisten vorgesehen sein, welche durch ihre stete Berührung mit der längsseitigen inneren Wandfläche des Gehäuses die sich stetig verändernden Räume, die mit der längsseitigen inneren Wandfläche des Gehäuses und den längsseitigen äußeren Wandflächen des prismenartigen Körpers in Verbindung mit den inneren Wandflächen der beiden stirnseitigen Wände des Gehäuses gebildet werden, voneinander trennen bzw. sie gegeneinander abdichten. Die Dichtungsleisten sind am Rotor, an den Längskanten des prismenartigen Körpers bevorzugt austauschbar gehalten.

Am Rotor, an den Stirnseiten der bevorzugt zylindrischen Zwischenwand sind Dichtungselemente und insbesondere auch Führungselemente vorgesehen, welche die inneren Wandflächen der beiden stirnseitigen Außenwände des Gehäuses berühren. Dadurch wird der, von der inneren Wandfläche der Zwischenwand radial umschlossene, in Verbindung mit den inneren Wandflächen des Gehäuses gebildete Raum gegen den als Spülkammer zur Aufnahme von Spaltverlusten genutzten Raum abgedichtet.

Das Gehäuse der Rotationskolben-Verdrängermaschine ist aus einem Mantelelement, das die längsseitige Wand bildet und an dem zwei Elemente, die die stirnseitigen Wände des Gehäuses bilden, lösbar befestigt sind, zusammengesetzt. Mit der vorstehenden Aufteilung ergibt sich eine einfache Bauweise für das Gehäuse der Rotationskolben-Verdrängermaschine. Das Mantelelement, das die längsseitige Wand des Gehäuses bildet ist vorzugsweise aus einem Gusseisen-Werkstoff wie Gusseisen mit Kugelgraphit oder entkohlend geglühtem Temperguss oder auch aus Stahlguss hergestellt. Dabei kann die Form für die innere Wandfläche der längsseitigen Wand des Gehäuses in etwa äquidistant vergrößert zur theoretischen Form der inneren Wandfläche gegossen sein. Der Distanzraum zur, durch einen Formkern vorgegebenen, theoretischen Form der inneren Wandfläche des Gehäuses, wird dann durch Ausgießen mit einem Kunststoff oder mit Mineralguss (Polymerbeton) überbrückt.

Die beiden Elemente, die die stirnseitigen Wände des Gehäuses bilden, sind bevorzugt über eine Flanschverbindung mit dem Mantelelement, das die längsseitige Wand des Gehäuses bildet, verschraubt. Im Zentrum der stirnseitigen Gehäusewände sind die Lager für die Exzenterwelle angeordnet. An der Exzenterwelle ist der Durchmesser des Exzenters zweckhaft größer ausgeführt, als der, um das zweifache Maß für die Exzentrizität vergrößerte, größte Wellendurchmesser. Mit einer derartigen Ausführung ist eine einfache Fertigung für die Exzenterwelle und ebenso eine einfache Montage für den Rotor gegeben.

Als wesentliche Vorteile ergeben sich für die beschriebene Rotationskolben-Verdrängermaschine:
- einfacher Aufbau
- keine Ventile für die Steuerung der Zu- bzw. Abführung des Arbeitsmediums
- keine speziellen Einrichtungen für die Zuführung des Arbeitsmediums
- einfache Herstellung der einzelnen Elemente
- einfache Kopplung von mehreren Einheiten
- einfache Integration in eine Gesamtanlage
- Absperrfunktion bei Stillstand des Rotors
- Einsatz als Verdränger-Kraftmaschine (Motor) als auch als Verdränger-Arbeitsmaschine (Pumpe)

Mehrere zusammengekoppelte Rotationskolben-Verdrängermaschinen, deren hochdruckseitige Zu- bzw. Abführungen für das Arbeitsmedium über ein Sammelrohr zu einem hochdruckseitigen Anschluss zusammengeführt sind und deren niederdruckseitige Zu- bzw. Abführungen für das Arbeitsmedium über ein Sammelrohr zu einem niederdruckseitigen Anschluss zusammengeführt sind, können zusammen mit einem oder mehreren Generatoren zur Erzeugung von elektrischer Energie, respektive einem oder mehrere Elektromotoren zum Antrieb der Rotationskolben-Verdrängermaschinen, deren elektr. Anschlüsse ebenfalls zu einem Anschluss zusammengeführt sind, auf einem Montagerahmen aufgebaut sein und so eine Montageeinheit und auch Transporteinheit bilden. Die Montage- und Transporteinheiten können eingehaust sein. Derartig ausgebildete Einheiten können einfach in eine Gesamtanlage zur Erzeugung von elektr. Energie aus Wasserkraft integriert werden.

Die beschriebene Rotationskolben-Verdrängermaschine ermöglicht die wirtschaftliche Erzeugung "erneuerbarer Energie" aus Wasserkraft durch Nutzung auch kleiner bis mittlerer Potentiale mit einer vergleichsweise einfach herzustellenden Verdrängermaschine. Der Einsatzbereich kann näherungsweise durch den Bereich für die Fallhöhe zwischen 5 m und 500 m sowie durch den Massenstrom für eine Einheit zwischen 0.1 m³/s und 2.0 m³/s eingegrenzt werden. Des weiteren bietet die beschriebene Rotationskolben-Verdrängermaschine die Möglichkeit der wirtschaftlichen Nutzung von "überschüssig" erzeugter elektrische Energie (z. B. aus Anlagen, in denen die Erzeugung von elektr. Energie über die Zeit in extremen Ausmaßen schwankt → Windkraft, Photovoltaik, etc.) durch Pumpen von Wasser in einen hochgelegenen Behälter zur Energiespeicherung bzw. durch die Rückgewinnung der in dem hochgelegenen Behälter gespeicherten Lageenergie mit einer vergleichsweise einfach herzustellenden Verdrängermaschine.

Nachfolgend sind mehrere Ausführungsbeispiele anhand der Zeichnungen erläutert und beschrieben. Hierzu zeigen:
- Fig. 1: ein schematisch dargestelltes Pumpspeicher-Wasserkraftwerk
- Fig 2: zwei schematische Ansichten von Rotationskolben-Verdrängermaschinen
- Fig. 3: eine Rotationskolben-Verdrängermaschine mit dreieckigem Rotor mit mehreren Rotorstellungen im Querschnitt
- Fig. 4: eine Rotationskolben-Verdrängermaschine mit dreieckigem Rotor im Längsschnitt
- Fig. 5: eine Rotationskolben-Verdrängermaschine mit fünfeckigem Rotor mit mehreren Rotorstellungen im Querschnitt

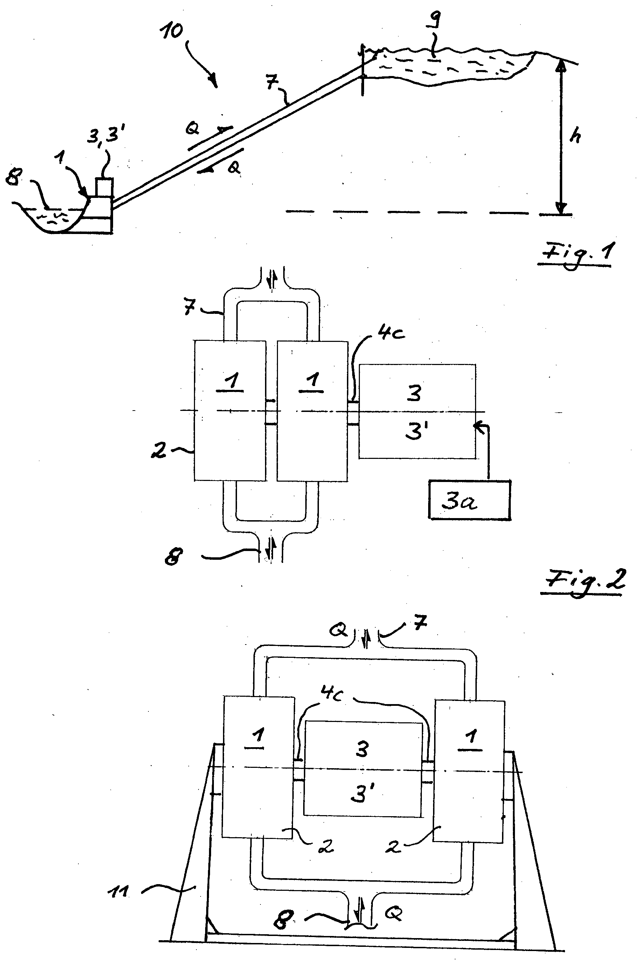

Fig. 1 zeigt ein schematisch dargestelltes Pumpspeicher-Wasserkraftwerk mit einem talseitigen Wasserspeicher bzw. Zufluss 8 und einem bergseitigen Wasserspeicher 9, die über eine Rohrleitung 7 miteinander verbunden sind. Über diese Rohrleitung 7 (wobei auch mehrere derartige Leitungen vorgesehen sein können) kann mit einer oder mehreren (gekoppelten) Rotationskolben-Verdrängermaschinen 1, die durch einen Motor 3' oder einen als Motoren arbeitende Generatoren angetrieben, Wasser aus dem talseitigen Wasserspeicher 8 zum bergseitigen Wasserspeicher 9 gepumpt werden. Umgekehrt kann aus dem bergseitigen Wasserspeicher 9 das Wasser über die Rohrleitung 7 durch die Rotationskolben-Verdrängermaschinen 1, die dadurch einen Generator 3 antreiben, zum talseitigen Wasserspeicher 8 geleitet werden. Die dabei "verbrauchte" bzw. "gewonnene" Leistung bemisst sich dabei im Wesentlichen nach dem Massestrom Q und der "Fallhöhe" h zwischen dem bergseitigen Wasserspeicher 9 und dem talseitigen Wasserspeicher 8.

Fig. 2 zeigt zwei schematische Ansichten von einer Doppelanordnung der Rotationskolben-Verdrängermaschinen 1. Auf der ersten Zeichnung sind die Rotationskolben-Verdrängermaschinen 1 über deren Exzenterwellen 4c direkt miteinander gekoppelt dargestellt, wobei der Generator/Motor 3/3' auf einer Seite an diese angekuppelt ist. Auf der zweiten Zeichnung sind die Rotationskolben-Verdrängermaschinen 1 durch den zwischen diesen angeordneten Generator/Motor 3/3' ebenfalls miteinander gekoppelt dargestellt. Bei Rotationskolben-Verdrängermaschinen, die für geringe Fallhöhen vorgesehen sind, kann der Generator/Motor 3/3' in der Art eines Radnabenmotors zumindest teilweise axial in das Zentrum des Gehäuses der Rotationskolben-Verdrängermaschinen 1 eingeschoben sein. Hierdurch wird die "Baulänge" der Gesamtanlage wesentlich verringert. Auf beiden Zeichnungen ist gezeigt, dass die Leitungen für die niederdruckseitige Zu- bzw. Abführung als auch die Leitungen für die hochdruckseitige Zu- bzw. Abführung des Arbeitsmediums zu den Rotationskolben-Verdrängermaschinen 1 jeweils zu einem Anschluss 8 bzw. 7 zusammengeführt sind. Zudem ist auf der zweiten Zeichnung der Aufbau der Gesamtanlage auf einem Montagerahmen 11 angedeutet. Eine auf einem Montagerahmen vormontierte Gesamtanlage kann als Einheit transportiert und in einem entsprechend vorbereiteten Einbauort in einem Wasserkraftwerk einfach integriert werden.

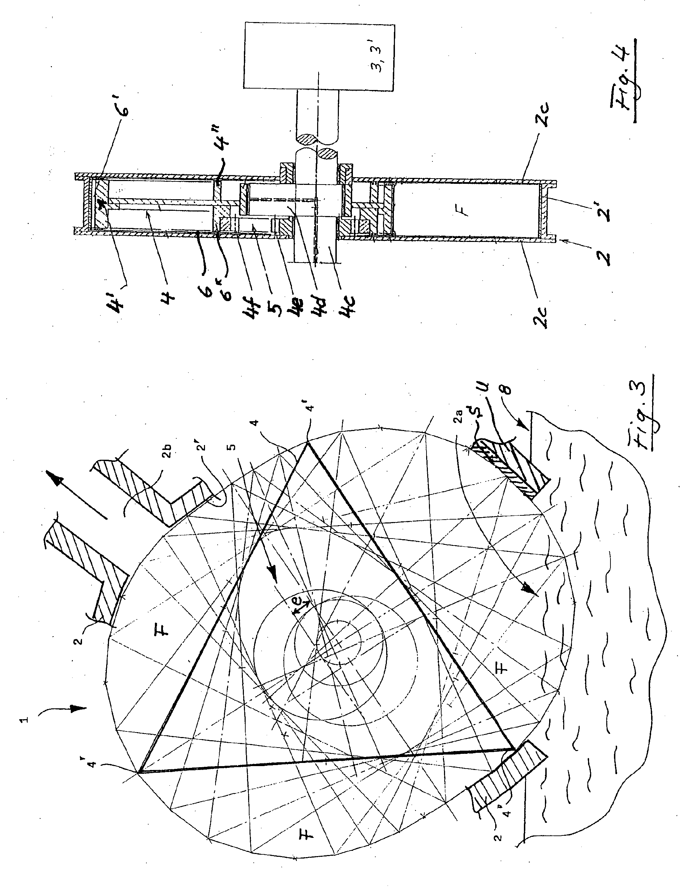

In Fig. 3 ist ein im Gehäuse 2 einer Rotationskolben-Verdrängermaschine 1 drehender Rotor 4 als dreieckiges Prisma dargestellt, dessen Längskanten 4' entlang der längsseitigen inneren Wandfläche 2'des Gehäuses 2 umlaufen. Es sind mehrere Rotorstellungen angedeutet, wobei zu erkennen ist, dass die Längskanten 4' des dreieckigen Rotors stets die längsseitige innere Wandfläche 2' des Gehäuses 2 berühren. Durch die längsseitige innere Wandfläche des Gehäuses 2 und die längsseitige äußere Wandfläche des dreieckigen Prismas des Rotors 4 werden in Verbindung mit den inneren Wandflächen der beiden stirnseitigen Wände 2c des Gehäuses 2 die sich mit der Rotorstellung verändernden Räume F für das Arbeitsmedium gebildet.

Im Zentrum des Rotors 4 ist ein Getriebe 5 und eine Exzenterwelle 4c angeordnet (vgl. auch Fig. 4). Die längsseitige innere Wandfläche des Gehäuses 2 ist jeweils einmal durch eine Öffnung 2a (für die niederdruckseitige Zu- bzw. Abführung des Arbeitsmediums) und eine Öffnung 2b (für die hochdruckseitige Zu- bzw. Abführung des Arbeitsmediums) unterbrochen. Wie aus der Zeichnung weiter ersichtlich, ist die Rotationskolben-Verdrängermaschinen 1 mit ihrer Öffnung 2a für die niederdruckseitige Zu- bzw. Abführung unter dem Wasserniveau des talseitigen Wasserspeichers 8 angeordnet. Bei Rotation des Rotors 4 im Uhrzeigersinn ergibt sich eine Förderung des Arbeitsmediums von der Öffnung 2a (für die niederdruckseitige Zu- bzw. Abführung) zur Öffnung 2b (für die hochdruckseitige Zu- bzw. Abführung). Die Rotationskolben-Verdrängermaschine 1 arbeitet im Pumpbetrieb.

Bei Rotation des Rotors 4 entgegen dem Uhrzeigersinn wird das Arbeitsmedium von der Öffnung 2b (zur hochdruckseitigen Zu- bzw. Abführung) zur Öffnung 2a (niederdruckseitige Zu- bzw. Abführung) gefördert. Die Rotationskolben-Verdrängermaschine arbeitet im Motorbetrieb.

Auf der Zeichnung ist im unteren rechten Bereich das die längsseitige Wand des Gehäuses bildende vorzugsweise aus einem Gusseisen oder aus Stahlguss hergestellte Mantelelement U angedeutet, wobei die längsseitige innere Wandfläche des Mantelelements U äquidistant vergrößert zu deren theoretischen Form und der sich aus dieser Distanz des Mantelelements U gegenüber der theoretischen Form der längsseitigen inneren Wandfläche des Gehäuses ergebende Distanzraum S, der mit einem Kunststoff oder mit Mineralguss ausgefüllt ist, dargestellt ist.

In Fig. 4 ist die Rotationskolben-Verdrängermaschine 1 gemäß der Fig. 3 im Längsschnitt dargestellt. Im Zentrum des Gehäuses 2 ist die Exzenterwelle 4c mit ihrem Exzenter 4d in den stirnseitigen Wänden des Gehäuses 2c gelagert. Im Pumpbetrieb wird die Rotationskolben-Verdrängermaschine über die Exzenterwelle 4c durch den Motor respektive den als Motor arbeitenden Generator 3' angetrieben. Im Motorbetrieb treibt die Rotationskolben-Verdrängermaschine über die Exzenterwelle 4c den Generator 3 an. Auf dem Exzenter 4d der Exzenterwelle 4c ist der Rotor 4 gelagert. In den Längskanten des prismenartigen Körpers 4' des Rotors 4 sind Dichtungsleisten 6' austauschbar gehalten. An den stirnseitigen Flächen des Rotors 4, die die inneren Wandflächen der stirnseitigen Wände 2c des Gehäuses 2 berühren, können Dichtungselemente 6" vorgesehen sein. Im Rotor 4 ist weiterhin ein Hohlzahnrad 4f vorzugsweise auf der Innenseite der zentrisch angeordneten Zwischenwand 4" angeordnet, welches in das, auf der Drehachse der Exzenterwelle 4c angeordnete, an der stirnseitigen Gehäusewand 2c befestigte Zahnritzel 4e eingreift. Das Gehäuse ist aus dem die längsseitige Außenwand bildende Mantelelement und zwei stirnseitigen Wänden 2c zusammengesetzt. Die stirnseitigen Wände 2c sind insbesondere über eine Flanschverbindung mit dem Mantelelement verschraubt.

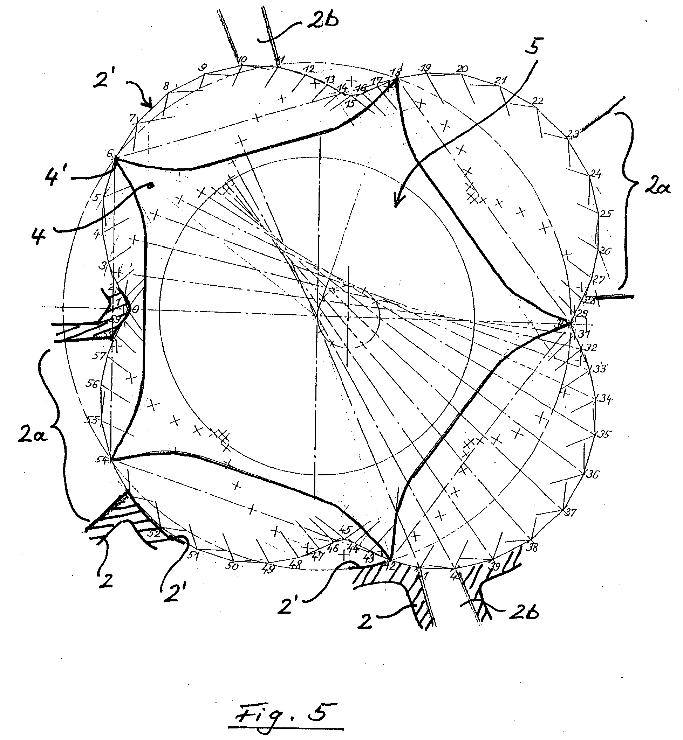

In Fig. 5 ist ein im Gehäuse einer Rotationskolben-Verdrängermaschine drehender Rotor 4 als fünfeckiges Prisma dargestellt. Wie in Fig. 3 sind mehrere Rotorstellungen angedeutet, wobei zu erkennen ist, dass die Längskanten 4' des fünfeckigen Rotors stets die längsseitige innere Wandfläche 2' des Gehäuses 2 berühren. Die hier dargestellte Rotationskolben-Verdrängermaschine enthält alle in Fig. 3 und Fig. 4 dargestellten Hauptteile der dort dargestellten Rotationskolben-Verdrängermaschine. Es sei noch darauf hingewiesen, dass die längsseitigen äußeren Wandflächen des prismenartigen Körpers des Rotors hier konkav ausgebildet sind, so dass sich ein strömungsgünstiger Einlauf für das Arbeitsmedium in die sich mit der Rotorstellung stets verändernden Räume ergibt.

In dieser Zeichnung sind auch die Öffnungen 2a für die niederdruckseitige Zu- bzw. Abführung sowie auch die Öffnungen 2b für die hochdruckseitige Zu- bzw. Abführung des Arbeitsmediums dargestellt. Aus der Darstellung ist ersichtlich, dass die Öffnungen 2b für die hochdruckseitige Zu- bzw. Abführung des Arbeitsmediums stets von den Öffnungen 2a für die niederdruckseitige Zu- bzw. Abführung abgetrennt sind. Somit ergibt sich für die Rotationskolben-Verdrängermaschine 1 bei Stillstand des Rotors 4 eine Absperrfunktion.

## Patentansprüche

1. Rotationskolben-Verdrängermaschine mit einem in einem Gehäuse (2) umlaufenden Rotor (4), der als vieleckiger prismenartiger Körper ausgebildet ist, bei dem die Verbindungsgeraden der Ecken (4') der Grundflächen ein gleichseitiges Vieleck bilden, und der um seine auf einer Kreisbahn laufenden Zentrumsachse eine Rotationsbewegung ausführt, wobei die Längskanten des prismenartigen Körpers entlang der längsseitigen inneren Wandfläche (2') des Gehäuses (2) umlaufen und zumindest annähernd berühren,
wobei an der längsseitigen inneren Wandfläche (2') des Gehäuses (2) im Wechsel mindestens jeweils eine Öffnung (2a) für die niederdruckseitige Zu- bzw. Abführung und eine Öffnung (2b) für die hochdruckseitige Zu- bzw. Abführung des Arbeitsmediums vorgesehen und so angeordnet sind, dass auf der längsseitigen inneren Wandfläche (2') des Gehäuses (2) jeweils das Ende der Öffnung (2a) für die niederdruckseitige Zu- bzw. Abführung und der Anfang der Öffnung (2b) für die hochdruckseitige Zu- bzw. Abführung sowie das Ende der Öffnung (2b) für die hochdruckseitige Zu- bzw. Abführung und der Anfang der Öffnung (2a) für die niederdruckseitige Zu- bzw. Abführung in Bezug auf das jeweilige Zentrum des Rotors (4) um den Zentriwinkel des aus den Verbindungsgeraden der Ecken (4') der Grundflächen des prismenartigen Körpers gebildeten, gleichseitigen Vielecks versetzt angeordnet sind,
**dadurch gekennzeichnet,**
**dass** mehrere so ausgebildete Rotationskolben-Verdrängermaschinen (1) in einem Wasserkraftwerk als durch das Arbeitsmedium Wasser angetriebener Motor (3') für den Antrieb eines Generators (3) zur Erzeugung von elektrischem Strom vorgesehen sind, als auch als Pumpe einsetzbar sind, die in entgegengesetzter Drehrichtung angetrieben durch einen Motor (3') oder den als Motor (3') arbeitenden Generator (3) das Arbeitsmedium Wasser zu einem höher gelegenen Speicher (9) fördern, wobei die Zu- bzw. Abführungen zu je einer Zu- bzw. Ableitung (7 bzw. 8) zusammengeführt sind.

2. Rotationskolben-Verdrängermaschine nach Anspruch 1, **dadurch gekennzeichnet, dass** der Rotor (4) auf einem Exzenter (4d) einer Exzenterwelle (4c) rotationsfrei so gelagert ist, dass die Mittelachse des Exzenters (4d) mit der Zentrumsachse des Rotors (4) zusammenfällt und durch ein Getriebe (5) bei einer Umdrehung der Exzenterwelle (4c) um einen Winkel rotiert wird, der dem Zentriwinkel des aus den Verbindungsgeraden der Ecken (4') der Grundflächen des prismenartigen Körpers gebildeten, gleichseitigen Vielecks entspricht.

3. Rotationskolben-Verdrängermaschine nach Anspruch 2, **dadurch gekennzeichnet, dass** das Getriebe (5) aus einem rotorfesten Hohlrad (4f), das auf der Zentrumsachse des Rotors (4) angeordnet ist, und einem gehäusefesten Zahnritzel (4e), das auf der Drehachse der Exzenterwelle (4c) angeordnet ist, gebildet ist.

4. Rotationskolben-Verdrängermaschine nach Anspruch 2, **dadurch gekennzeichnet, dass** das Getriebe (5) aus einem auf der Zentrumsachse des Rotors (4) angeordneten Planetengetriebe gebildet ist, dessen Sonnenrad-Zahnritzel (4e) rotationsfest auf dem Exzenter (4d) der Exzenterwelle (4c) befestigt ist, dessen Planetenräder rotationsfrei auf dem rotorfesten Planetenträger gelagert sind und dessen Hohlrad (4f) rotationsfrei auf dem Exzenter (4d) der Exzenterwelle (4c) gelagert und über eine Kreuzkoppel rotationsfest an einer Stirnwand des Gehäuses (2) abgestützt ist.

5. Rotationskolben-Verdrängermaschine nach einem der Ansprüche 1 bis 4, **dadurch gekennzeichnet, dass** mehrere Verdrängermaschinen (1) parallel nebeneinander angeordnet und über ihre Exzenterwellen (4c) aneinandergekuppelt sind, wobei an zumindest einem freien Ende der Exzenterwellen (4c) der Generator (3) bzw. Motor (3') angekuppelt ist.

6. Rotationskolben-Verdrängermaschine nach einem der Ansprüche 1 bis 4, **dadurch gekennzeichnet, dass** zwei Verdrängermaschinen (1) parallel nebeneinander angeordnet und deren Exzenterwellen (4c) über den dazwischen angeordneten Generator (3) bzw. Motor (3') miteinander gekoppelt sind.

7. Rotationskolben-Verdrängermaschine nach Anspruch 5 oder 6, **dadurch gekennzeichnet, dass** die Exzenterwellen (4c) der einzelnen Rotationskolben-Verdrängermaschinen (1) um ein bestimmtes Winkelmaß in Umlaufrichtung zueinander versetzt gekoppelt sind.

8. Rotationskolben-Verdrängermaschine nach einem der Ansprüche 2 bis 7, **dadurch gekennzeichnet, dass** im Rotor (4) auf dessen Zentrumsachse, eine das Getriebe (5) radial umschließende, an die inneren Wandflächen der beiden stirnseitigen Wände des Gehäuses (2) reichende Zwischenwand (4") angeordnet ist. wobei am Rotor (4) an den Stirnseiten der Zwischenwand (4") Dichtungselemente und/oder Führungselemente (6") vorgesehen sind, welche die inneren Wandflächen der beiden stirnseitigen Wände des Gehäuses (2) berühren,

9. Rotationskolben-Verdrängermaschine nach einem der Ansprüche 1 bis 8, **dadurch gekennzeichnet, dass** am Rotor (4) an den Stirnseiten der die längsseitigen äußeren Wandflächen des prismenartigen Körpers bildenden Außenwände Dichtungselemente (6) vorgesehen sind, welche die inneren Wandflächen der beiden stirnseitigen Wände des Gehäuses (2) berühren.

10. Rotationskolben-Verdrängermaschine nach einem der Ansprüche 1 bis 9, **dadurch gekennzeichnet, dass** am Rotor (4) an den Längskanten des prismenartigen Körpers Dichtungsleisten (6') angeordnet sind.

11. Rotationskolben-Verdrängermaschine nach einem der Ansprüche 1 bis 10, **dadurch gekennzeichnet, dass** das Gehäuse (2) aus einem Mantelelement, das die längsseitige Wand des Gehäuses (2) bildet und aus zwei Elementen, die die stirnseitigen Wände des Gehäuses (2) bilden und mit dem Mantelelement lösbar verbunden sind, zusammengesetzt ist, wobei das Mantelelement, das die längsseitige Wand des Gehäuses (2) bildet, aus einem Gusseisen-Werkstoff oder Stahlguß hergestellt ist, wobei die Form für die längsseitige innere Wandfläche des Gehäuses (2) äquidistant vergrößert zur Bahnkurve der Rotors (4) entlang der längsseitigen inneren Wandfläche (2') des Gehäuses (2) gegossen ist und der Distanzraum zu der von einem Formkern vorgegebenen Endform durch Ausgießen mit einem Kunststoff oder mit Mineralguss ausgefüllt ist.

12. Rotationskolben-Verdrängermaschine nach einem der Ansprüche 1 bis 11, **dadurch gekennzeichnet, dass** an der Exzenterwelle (4c) der Durchmesser des Exzenters (4d) mindestens so groß wie der um das zweifache Maß für die Exzentrizität (e) vergrößerte, größte Wellendurchmesser ausgeführt ist.

13. Rotationskolben-Verdrängermaschine nach einem der Ansprüche 1 bis 12, **dadurch gekennzeichnet, dass** mehrere Rotationskolben-Verdrängermaschinen (1) über ihre Exzenterwellen (4c) aneinandergekuppelt auf einem Montagerahmen (11) aufgebaut sind, wobei deren hochdruckseitigen und niederdruckseitigen Zu- bzw. Abführungen für das Arbeitsmedium zu je einer Zu- bzw. Ableitung (7 bzw. 8) zusammengeführt sind.

14. Rotationskolben-Verdrängermaschine nach Anspruch 13, **dadurch gekennzeichnet, dass** der Rotor (4) als 5-Eck ausgebildet ist und an der längsseitigen inneren Wandfläche (2') des Gehäuses (2) im Wechsel je zwei Öffnungen (2a) für die niederdruckseitige Zu- bzw. Abführung und zwei Öffnungen (2b) für die hochdruckseitige Zu- bzw. Abführung des Arbeitsmediums vorgesehen sind.

15. Verwendung einer Rotationskolben-Verdrängermaschine nach einem der Ansprüche 1 bis 14, **dadurch gekennzeichnet, dass** die Rotationskolben-Verdrängermaschine (1) in einem Pumpspeicherkraftwerk (10) integriert ist, wobei die Öffnungen (2a) für die niederdruckseitige Zu- bzw. Abführung unterhalb des Unterwasserniveaus angeordnet sind und mehrere Öffnungen (2a bzw. 2b) für die Zu- bzw. Abführung des Wassers zu einer Zu- bzw. Ableitung (7 bzw. 8) zusammengeschlossen sind.

## Claims

1. Rotary piston displacement machine with a rotor (4), which is arranged in a housing (2) and is designed as a polygonal prism-like body, in which the connecting lines of the corners (4') of the base surfaces form an equilateral polygon and which rotates around a circle running on a circular path (2') of the housing (2) and at least approximately touching it, wherein alternately, on the longitudinal inner wall surface (2') of the housing (2), the longitudinal edges of the prism-like body alternate with at least an opening (2a) for the low-pressure supply and an opening (2b) for the high-pressure supply (2') of.the working medium, wherein at least the longitudinal inner wall surface (2') of the housing (2), the end of the opening (2a) for the low-pressure supply or discharge and the beginning of the opening (2b) for the high-pressure supply or discharge as well as the end of the opening (2b) for the high-pressure supply or discharge and the beginning of the opening (2a) for the low-pressure supply or discharge are disposed offset with respect to the respective centre of the rotor (4) by the centre angle of the equilateral polygon formed from the connecting straight lines of the corners (4') of the base surfaces of the prism-like body, **characterized in that** plural rotary piston displacement machines (1) are provided in a hydroelectric power plant as a motor (3') driven by the working medium for driving a generator (3) for generating electric current, and can also be used as a pump which is driven in the opposite direction of rotation by a motor (3') or the generator (3) operating as a motor (3') for conveying the working medium water to a higher-level reservoir (9), wherein the conduits for each supply or discharge (7, 8, respectively) are interconnected.

2. Rotary piston displacement machine according to claim 1, **characterized in that** the rotor (4) is mounted without rotation on an eccentric (4d) of an eccentric shaft (4c), such that the centre axis of the eccentric (4d) and the centre axis of the rotor (4) coincide, and is rotated by an angle which corresponds to the centre angle of the equilateral polygon formed by the connecting straight lines of the corners (4') of the base surfaces of the prism-like body by a gear (5) on rotation of the eccentric shaft (4c).

3. Rotary piston displacement machine according to claim 2, **characterized in that** the gear (5) consists of a rotor-fixed ring gear (4f) arranged on the centre axis of the rotor (4) and a housing-fixed tooth pinion (4e), arranged on the axis of rotation of the eccentric shaft (4c).

4. Rotary piston displacement machine according to claim 2, **characterized in that** the gear (5) is formed by a planetary gear arranged on the centre axis of the rotor (4), the sun gear teeth of which is fixed on the eccentric (4d) of the eccentric shaft (4c), planetary wheels of which are mounted without rotation on a planet carrier and the internal gear (4f) thereof is mounted on the eccentric (4d) of the eccentric shaft (4c) in a rotation-free manner and is supported in a rotationally fixed manner on a front wall of the housing (2) by means of a cross coupler.

5. Rotary piston displacement machine according to one of claims 1 to 4, **characterized in that** a plurality of displacement machines (1) are arranged parallel to each other and are coupled to one another via their eccentric shafts (4c), wherein the generator (3) and/or the motor (3') is coupled to at least one free end of the eccentric shafts (4c).

6. Rotary piston displacement machine according to one of claims 1 to 4, **characterized in that** two displacement machines (1) are arranged parallel to each other and the eccentric shafts (4c) of which are coupled to each other via the generator (3) or motor (3').

7. Rotary piston displacement machine according to claim 5 or 6, **characterized in that** the eccentric shafts (4c) of the individual rotary piston displacement machines (1) are coupled to each other by a certain offset angle in the direction of rotation.

8. Rotary piston displacement machine according to one of claims 2 to 7, **characterized In that** an intermediate wall (4") radially surrounds the gear (5) and extends to the face walls of the housing (2), wherein sealing elements and/or guide elements (6") are provided on the rotor (4) to be in contact with the inner wall surfaces of the two face walls of the housing (2).

9. Rotary piston displacement machine according to one of claims 1 to 8, **characterized in that** sealing elements (6) are provided on the end faces of the outer walls forming the long-sided outer wall surfaces of the prism-like body on the rotor (4) for contacting the inner wall surfaces of the two face walls of the housing (2).

10. Rotary piston displacement machine according to one of claims 1 to 9, **characterized in that** sealing strips (6') are arranged on the rotor (4) on the longitudinal edge of the prism-like body.

11. Rotary piston displacement machine according to one of claims 1 to 10, **characterized in that** the housing (2) consists of a casing element which forms the long-sided wall of the housing (2) and consists of two elements which form the face walls of the housing (2), being interconnnected in a detachable manner, wherein the casing element for forming the long-sided wall of the housing is made of a cast iron material or cast steel, wherein the shape for the longitudinal side inner wall surface (2') of the housing (2) is increased by an equidistant enlargement of the motion curve of the rotor (4) along the inner wall surface (2') of the housing (2), and the spacing is filled by a plastic or mineral castings to form the end surface predetermined by a core.

12. Rotary piston displacement machine according to one of claims 1 to 11, **characterized in that** the diameter of the eccentric (4d) on the eccentric shaft (4c) is designed at least as large as the largest shaft diameter, being increased by the double measure for the eccentricity (e).

13. Rotary piston displacement machine according to one of claims 1 to 12, **characterized in that** a plurality of rotary piston displacement machines (1) are mounted on a mounting frame (11) by way of their eccentric shafts (4c), wherein their high-pressure side and low-pressure side supplies or outlets for the working medium are each connected to form one conduit (7, 8, respectively).

14. Rotary-piston displacement machine according to claim 13, **characterized in that** the rotor is formed as a pentagon and two openings (2a) for the low-pressure inlet and two outlet openings (2a) are provided alternately on the inner wall (2') of the housing (2) as well as two openings (2b) for the high-pressure supply or discharge of the working medium.

15. Use of a rotary piston displacement machine according to one of claims 1 to 14, **characterized in that** the rotary piston displacement machine (1) is integrated in a pump-reservoir power station, wherein the openings (2a) for the low-pressure supply or discharge are arranged below the low-water level and wherein a plurality of openings (2a or 2b) for the supply or discharge of the water are connected to a conduit line (7, 8, respectively).

## Revendications

1. Machine à piston rotatif à déplacement positif comprenant un rotor (4) tournant dans un boîtier (2), qui est réalisé sous forme de corps prismatique polygonal, dans lequel les droites reliant les coins (4') des surfaces de base forment un polygone équilatéral, et qui effectue un mouvement de rotation autour de son axe central passant par une trajectoire circulaire, les arêtes longitudinales du corps prismatique s'étendant le long du pourtour de la surface de paroi longitudinale intérieure (2') du boîtier (2) et étant au moins approximativement en contact, au moins à chaque fois une ouverture (2a) pour l'alimentation ou l'évacuation côté basse pression et une ouverture (2b) pour l'alimentation ou l'évacuation côté haute pression du fluide de travail étant prévues et disposées en alternance au niveau de la surface de paroi intérieure longitudinale (2') du boîtier (2), de telle sorte qu'à chaque fois l'extrémité de l'ouverture (2a) pour l'alimentation ou l'évacuation côté basse pression et l'entrée de l'ouverture (2b) pour l'alimentation ou l'évacuation côté haute pression ainsi que l'extrémité de l'ouverture (2b) pour l'alimentation ou l'évacuation côté haute pression et l'entrée de l'ouverture (2a) pour l'alimentation ou l'évacuation côté basse pression soient disposées sur la surface de paroi intérieure longitudinale (2') du boîtier (2), par rapport au centre respectif du rotor (4) de manière décalée de l'angle au centre du polygone équilatéral formé à partir dés droites de liaison des coins (4') des surfaces de base du corps prismatique,
**caractérisée en ce que**
plusieurs machines à piston rotatif à déplacement positif (1) ainsi réalisées sont prévues dans une centrale hydraulique sous forme de moteur (3') entraîné par l'eau en tant que fluide de travail pour l'entraînement d'un générateur (3) afin de générer un courant électrique, et peuvent être utilisées également en tant que pompes, qui, entraînées dans un sens de rotation opposé par un moteur (3') ou par le générateur (3) fonctionnant en tant que moteur (3'), refoulent l'eau en tant que fluide de travail vers un réservoir placé plus haut (9), les alimentations ou évacuations étant réunies en une conduite d'alimentation ou d'évacuation respective (7, respectivement 8).

2. Machine à piston rotatif à déplacement positif selon la revendication 1, **caractérisée en ce que** le rotor (4) est supporté sans rotation sur un excentrique (4d) d'un arbre excentrique (4c) de telle sorte que l'axe médian de l'excentrique (4d) coïncide avec l'axe central du rotor (4) et soit tourné par une transmission (5) lors d'un tour de l'arbre excentrique (4c), d'un angle qui correspond à l'angle au centre du polygone équilatéral formé à partir des droites de liaison des coins (4') des surfaces de base du corps prismatique.

3. Machine à piston rotatif à déplacement positif selon la revendication 2, **caractérisée en ce que** la transmission (5) est formée d'une couronne dentée fixée au rotor (4f), qui est disposée sur l'axe central du rotor (4), et d'un pignon denté fixé au boîtier (4e), qui est disposé sur l'axe de rotation de l'arbre excentrique (4c).

4. Machine à piston rotatif à déplacement positif selon la revendication 2, **caractérisée en ce que** la transmission (5) est formée d'un engrenage planétaire disposé sur l'axe central du rotor (4), dont le pignon denté de roue solaire (4e) est fixé de manière solidaire en rotation sur l'excentrique (4d) de l'arbre excentrique (4c), dont les satellites sont supportés sans rotation sur le porte-satellites fixé au rotor et dont la couronne dentée (4f) est supportée sans rotation sur l'excentrique (4d) de l'arbre excentrique (4c) et est supportée par le biais d'une bielle croisée de manière solidaire en rotation sur une paroi frontale du boîtier (2).

5. Machine à piston rotatif à déplacement positif selon l'une quelconque des revendications 1 à 4, **caractérisée en ce que** plusieurs machines à déplacement positif (1) sont disposées parallèlement les unes à côté des autres et sont accouplées les unes aux autres par le biais de leurs arbres excentriques (4c), le générateur (3) ou le moteur (3') étant raccordé à au moins une extrémité libre des arbres excentriques (4c).

6. Machine à piston rotatif à déplacement positif selon l'une quelconque des revendications 1 à 4, **caractérisée en ce que** deux machines à déplacement positif (1) sont disposées parallèlement l'une à côté de l'autre et leurs arbres excentriques (4c) sont accouplés l'un à l'autre par le biais du générateur (3) ou du moteur (3') disposé entre elles.

7. Machine à piston rotatif à déplacement positif selon la revendication 5 ou 6, **caractérisée en ce que** les arbres excentriques (4c) des machines à piston rotatif à déplacement positif individuelles (1) sont accouplés de manière décalée les uns des autres d'une dimension angulaire déterminée dans la direction périphérique.

8. Machine à piston rotatif à déplacement positif selon l'une quelconque des revendications 2 à 7, **caractérisée en ce que** dans le rotor (4) sur son axe central, est disposée une paroi intermédiaire (4") entourant radialement la transmission (5), s'étendant jusqu'aux surfaces de paroi intérieure des deux parois frontales du boîtier (2), des éléments d'étanchéité et/ou des éléments de guidage (6") étant prévus sur le rotor (4) au niveau des côtés frontaux de la paroi intermédiaire (4"), lesquels viennent en contact avec les surfaces de paroi intérieures des deux parois frontales du boîtier (2).

9. Machine à piston rotatif à déplacement positif selon l'une quelconque des revendications 1 à 8, **caractérisée en ce que** sur le rotor (4), au niveau des côtés frontaux des parois extérieures formant les surfaces de paroi extérieures longitudinales du corps prismatique, sont prévus des éléments d'étanchéité (6) qui viennent en contact avec les surfaces de paroi intérieure des deux parois frontales du boîtier (2).

10. Machine à piston rotatif à déplacement positif selon l'une quelconque des revendications 1 à 9, **caractérisée en ce que** des baguettes d'étanchéité (6') sont disposées sur le rotor (4) au niveau des arêtes longitudinales du corps prismatique.

11. Machine à piston rotatif à déplacement positif selon l'une quelconque des revendications 1 à 10, **caractérisée en ce que** le boîtier (2) est constitué d'un élément d'enveloppe qui forme la paroi longitudinale du boîtier (2) et de deux éléments qui forment les parois frontales du boîtier (2) et qui sont connectés de manière amovible à l'élément d'enveloppe, l'élément d'enveloppe qui forme la paroi longitudinale du boîtier (2) étant fabriqué en un matériau en fonte ou en acier moulé, le moule pour la surface de paroi intérieure longitudinale du boîtier (2), agrandi de manière équidistante par rapport à la courbe de trajectoire du rotor (4) le long de la surface de paroi intérieure longitudinale (2') du boîtier (2), étant coulé, et l'espace par rapport à la forme finale prédéfinie par un noyau de moule étant rempli par coulée avec une matière plastique ou avec de la fonte minérale.

12. Machine à piston rotatif à déplacement positif selon l'une quelconque des revendications 1 à 11, **caractérisée en ce qu'**au niveau de l'arbre excentrique (4c), le diamètre de l'excentrique (4d) est réalisé de manière à être au moins aussi grand que le plus grand diamètre de l'arbre augmenté du double de la dimension pour l'excentricité (e).

13. Machine à piston rotatif à déplacement positif selon l'une quelconque des revendications 1 à 12, **caractérisée en ce que** plusieurs machines à piston rotatif à déplacement positif (1) sont montées sur un cadre de montage (11) de manière accouplée les unes aux autres par leurs arbres excentriques (4c), leurs alimentations ou évacuations côté haute pression et côté basse pression pour le fluide de travail étant réunies à chaque fois en une conduite d'alimentation, respectivement une conduite d'évacuation (7, respectivement 8).

14. Machine à piston rotatif à déplacement positif selon la revendication 13, **caractérisée en ce que** le rotor (4) est réalisé sous forme de pentagone et à chaque fois deux ouvertures (2a) pour l'alimentation ou l'évacuation côté basse pression et deux ouvertures (2b) pour l'alimentation ou l'évacuation côté haute pression du fluide de travail sont prévues en alternance au niveau de la surface de paroi intérieure longitudinale (2') du boîtier (2).

15. Utilisation d'une machine à piston rotatif à déplacement positif selon l'une quelconque des revendications 1 à 14, **caractérisée en ce que** la machine à piston rotatif à déplacement positif (1) est intégrée dans une centrale à accumulation par pompage (10), les ouvertures (2a) pour l'alimentation ou l'évacuation côté basse pression étant disposées en dessous du niveau d'eau inférieur et plusieurs ouvertures (2a, respectivement 2b) pour l'alimentation ou l'évacuation de l'eau étant réunies en une conduite d'alimentation, respectivement d'évacuation (7, respectivement 8).
